# EUROPEAN PATENT SPECIFICATION

(11) **EP 2 624 551 B1**
(45) Date of publication and mention of the grant of the patent: **01.04.2020**
(21) Application number: 11828914.9
(22) Date of filing: 22.09.2011
(51) Int. Cl.: H04N 7/173

(54) **CONTENT TRANSMITTING DEVICE, CONTENT TRANSMITTING METHOD, CONTENT REPRODUCTION DEVICE, CONTENT REPRODUCTION METHOD, PROGRAM, AND CONTENT DELIVERY SYSTEM**
INHALTSÜBERTRAGUNGSVORRICHTUNG, INHALTSÜBERTRAGUNGSVERFAHREN, INHALTSWIEDERGABEVORRICHTUNG, INHALTSWIEDERGABEVERFAHREN UND INHALTSAUSGABESYSTEM
DISPOSITIF DE TRANSMISSION DE CONTENU, PROCÉDÉ DE TRANSMISSION DE CONTENU, DISPOSITIF DE REPRODUCTION DE CONTENU, PROCÉDÉ DE REPRODUCTION DE CONTENU, PROGRAMME ET SYSTÈME DE DISTRIBUTION DE CONTENU

(30) Priority: 05.07.2011 US 201161504481 P; 01.10.2010 US 388999 P
(43) Date of publication of application: 07.08.2013
(73) Proprietor: Saturn Licensing LLC, New York, NY 10022-3211 (US)
(72) Inventor: KITAZATO Naohisa, Tokyo 108-0075 (JP)
(74) Representative: Witte, Weller & Partner Patentanwälte mbB
(86) International application number: PCT/JP2011/071570
(87) International publication number: WO 2012/043357

(56) References cited:
- EP-A1- 1 389 020
- WO-A1-2010/109860
- US-A1- 2003 033 157
- US-A1- 2003 086 003
- US-A1- 2009 087 161
- HIDEAKI KIMATA: 'Movement on MPEG 3DAV toward International Standardization of 3D Video' IPSJ SIG NOTES vol. 2005, no. 23, 11 March 2005, XP008169163

## Description

### [Technical Field]

The present disclosure relates to a content transmission apparatus, a content transmission method, a content reproduction apparatus, a content reproduction method, and a program.

Specifically, the present disclosure relates to a content transmission apparatus, a content transmission method, a content reproduction apparatus, a content reproduction method, and a program by which a user of a content reproduction apparatus can view content with an arbitrary picture frame.

### [Background Art]

In related art, in a video content distribution service represented by a video-on-demand service provided through a television broadcast or the Internet, a viewer can view video content only with a picture frame produced by the broadcasting side.

It is to be noted that, in some pieces of video content (so-called multi-angle content) which uses a package medium such as a DVD (digital versatile disc) or a BD (blu-ray disc), a plurality of videos obtained by imaging a sport event or a concert venue, which is an imaging object, from a plurality of different points of views (angles) are recorded (refer to, for example, PTL 1).

When video content ready for multi angles is reproduced, the viewer can select and view one of the plurality of videos. However, even in the case of video content ready for multi angles, a video of an arbitrary picture frame, namely, a video in a state in which it is imaged from an arbitrary point of view, cannot necessarily be viewed.

### [Citation List]

### [Patent Literature]

[PTL 1]
Japanese Patent Laid-Open No. 2009-135946

US 2003/0086003 A1 discloses a video data processing apparatus and method, a data distributing apparatus and method and a data receiving apparatus and method. According to this document, omnidirectional video images shot by a plurality of cameras are so distributed that the video images can be changed seamlessly on a receiver side. A panorama image, which is composed of the video frames obtained originally from the plural cameras and arranged on a cylindrical lateral plane, is divided into equal halves, and the second-half frame portion thus divided is placed under the first-half frame portion. Further, rearrangement is performed in such a manner that an extra video frame of the adjacent camera is pasted to one edge of the divided portion, and in the vicinities of both edges of the omnidirectional video image, the video frames of the adjacent cameras thus pasted together are duplicated, whereby any region astride the video frames of the adjacent cameras can be changed seamlessly.

### [Summary]

### [Technical Problem]

Incidentally, with regard to video content, appearance of a viewing form in which not only videos of a broadcast picture frame or videos of multi-angles prepared in advance can be selected but also a video imaged from an arbitrary point of view conforming to a preference of each viewer can be viewed is demanded.

In particular, such a demand as, for example, to view a scene, which is not displayed on the screen now, on the right side of a scene (imaging object) which is displayed on the screen now or to view a scene (imaging object) displayed on the screen now from the side.

The present disclosure has been made in view of such a situation as described above and makes it possible to view a video in a state in which it is imaged from an arbitrary point of view.

### [Solution to Problem]

According to a first aspect of the present disclosure, there is provided a content transmission apparatus as defined in claim 1.

The generation section may generate the VRT further including a viewpoint string type of each of viewpoint videos which configure the video content and a neighboring viewpoint video imaged in the neighborhood of the viewpoint video.

The viewpoint string type may be one of Panorama, Theater, Parallel and Separated.

The broadcasting section or the storage section may serve also as the supplying section.

According to the first aspect of the present disclosure, there is further provided a content transmission method as defined in claim 2.

According to the first aspect of the present disclosure, there is further provided a program which causes a computer to carry out the content transmission method.

In the first aspect of the present disclosure, a VRT including acquisition destination information of each of viewpoint videos which configure multi viewpoint video content is generated, and the generated VRT is supplied to the content reproduction apparatus. The plurality of viewpoint videos which configure the retained multi viewpoint video content are broadcast, and the plurality of viewpoint videos which configure the retained multi viewpoint video content are distributed through the network.

According to a second aspect of the present disclosure, there is provided a content reproduction apparatus as defined in claim 3.

The acquired VRT may further include a viewpoint string type of each of viewpoint videos which configure the multi viewpoint video content and a neighboring viewpoint video imaged in the neighborhood of the viewpoint video.

The viewpoint string type may be one of Panorama, Theater, Parallel and Separated.

The generation section may connect, when the viewpoint string type of the plurality of received viewpoint videos is Panorama or Parallel, the plurality of received viewpoint videos and cut out a predetermined region to generate a video corresponding to the viewpoint moving operation, but generate, when the viewpoint string type of the plurality of received viewpoint videos is Theater, a video corresponding to the viewpoint moving operation by an interpolation in which the plurality of received viewpoint videos are used.

The reception section may receive from a broadcasting signal, or may acquire from a content transmission apparatus through a communication network, from among a plurality of viewpoint videos which configure the multi viewpoint video content, the plurality of viewpoint videos corresponding to the inputted viewpoint moving operation.

The inputting section may include a viewpoint moving button corresponding to the viewpoint string type of a neighboring viewpoint video included in the acquired VRT and imaged in the neighborhood of each of viewpoint videos which configure the multi viewpoint video content.

According to the second aspect of the present disclosure, there is further provided a content reproduction method as defined in claim 4.

According to the second aspect of the present disclosure, there is further provided a program for causing a computer to carry out the content reproduction method.

In the second aspect of the present disclosure, a VRT including acquisition destination information of each of viewpoint videos which configure multi viewpoint video content is acquired, and a viewpoint moving operation from a user is inputted. From among a plurality of viewpoint videos which configure the multi viewpoint video content, the plurality of viewpoint videos corresponding to the inputted viewpoint moving operation are received based on the VRT. Then, a video corresponding to the viewpoint moving operation is generated based on the plurality of received viewpoint videos.

### [Advantageous Effect of Invention]

According to the first aspect of the present disclosure, video content which can be viewed in a state in which it is imaged from an arbitrary point of view can be supplied to the reception side.

According to the second aspect of the present disclosure, a video in a state in which it is imaged from an arbitrary point of view can be viewed.

According to the third aspect of the present disclosure, a viewer can view a video in a state in which it is imaged from a point of view determined arbitrarily by the viewer.

### [Brief Description of Drawings]

[FIG. 1]

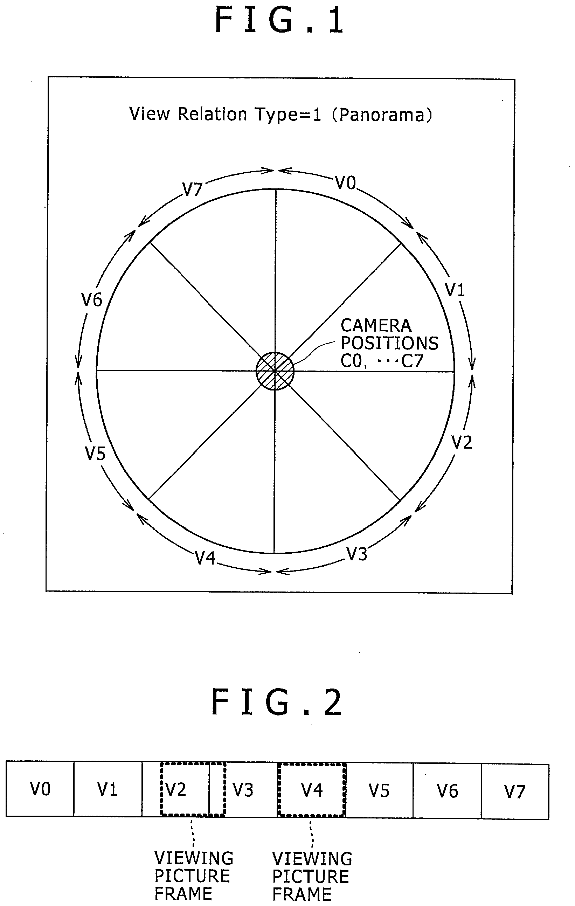

   FIG. 1 is a view illustrating View Relation Type = 1 (Panorama).
[FIG. 2]
   FIG. 2 is a view illustrating a state in which a plurality of multi viewpoint videos which configure video content of Panorama are connected in a horizontal direction.
[FIG. 3]

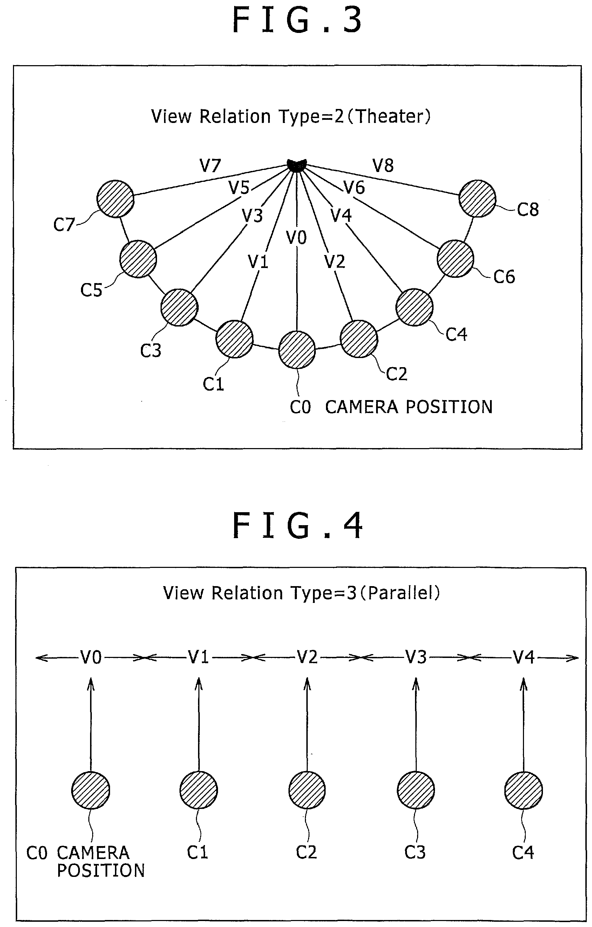

   FIG. 3 is a view illustrating View Relation Type = 2 (Theater).
[FIG. 4]
   FIG. 4 is a view illustrating View Relation Type = 3 (Parallel).
[FIG. 5]

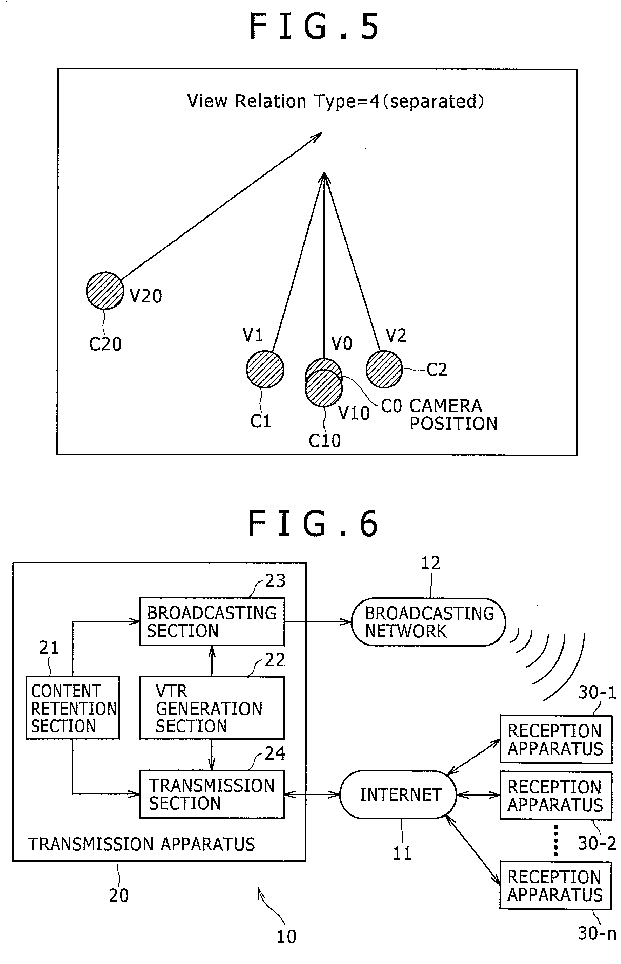

   FIG. 5 is a view illustrating View Relation Type = 4 (Separated).
[FIG. 6]
   FIG. 6 is a block diagram showing an example of a configuration of a multi viewpoint video content viewing system to which the present disclosure is applied.
[FIG. 7]

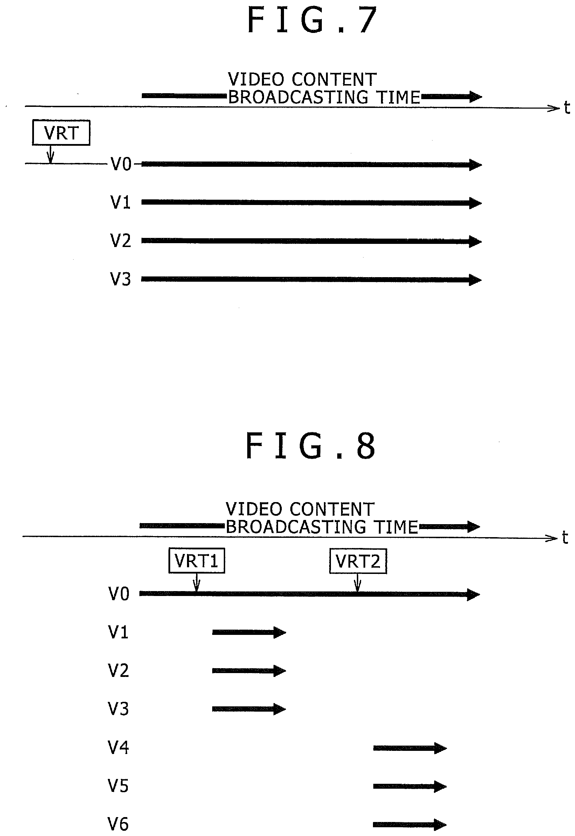

   FIG. 7 is a view illustrating a transmission timing of a VRT in the case where multi viewpoint videos are prepared in an overall period of video content.
[FIG. 8]
   FIG. 8 is a view illustrating a transmission timing of a VRT in the case where multi viewpoint videos are prepared in part of an overall period of video content.
[FIG. 9]

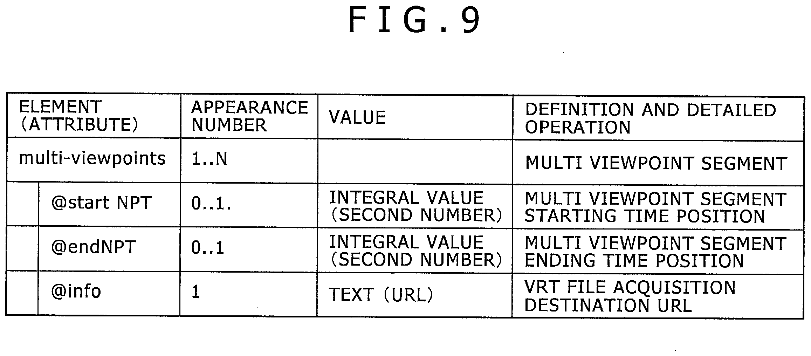

   FIG. 9 is a view illustrating an example of reference information for acquiring a VRT.
[FIG. 10]

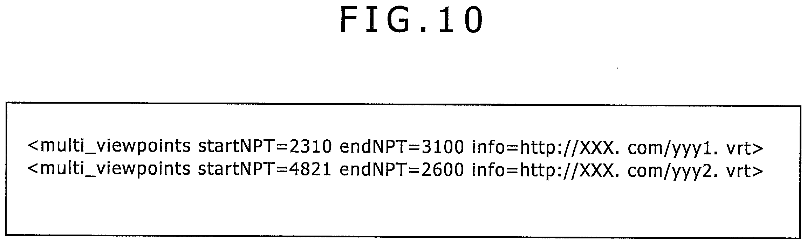

   FIG. 10 is a view illustrating an example of a description of reference information.
[FIG. 11]

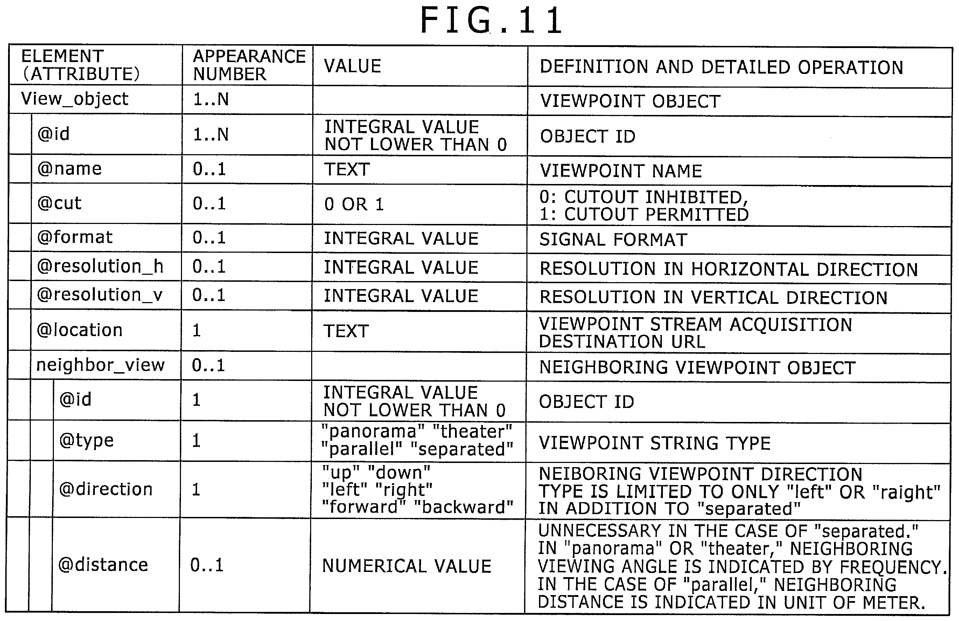

   FIG. 11 is view illustrating an example of a VRT.
[FIG. 12]

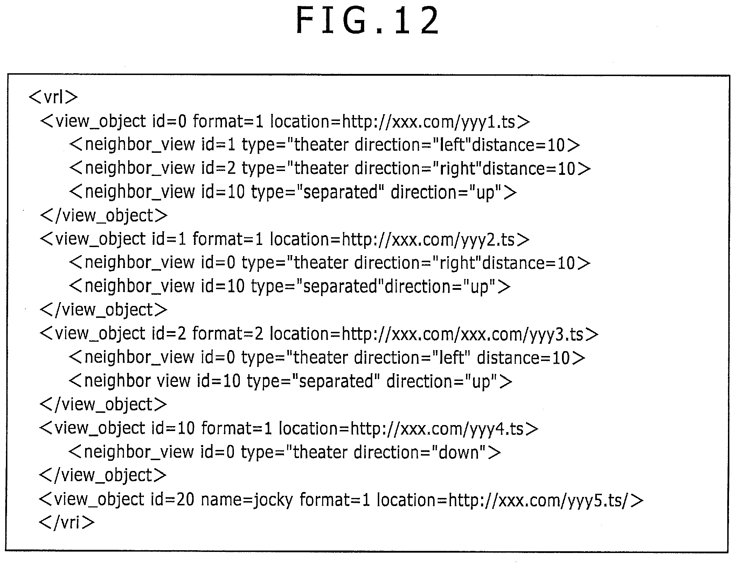

   FIG. 12 is a view illustrating an example of a description of a VRT.
[FIG. 13]

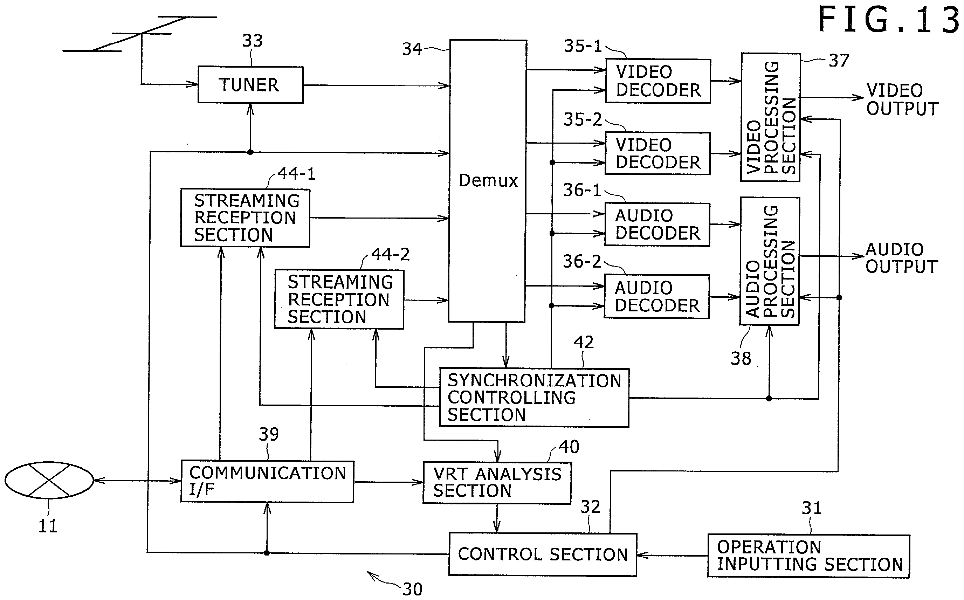

   FIG. 13 is a block diagram showing an example of a configuration of a reception apparatus.
[FIG. 14]

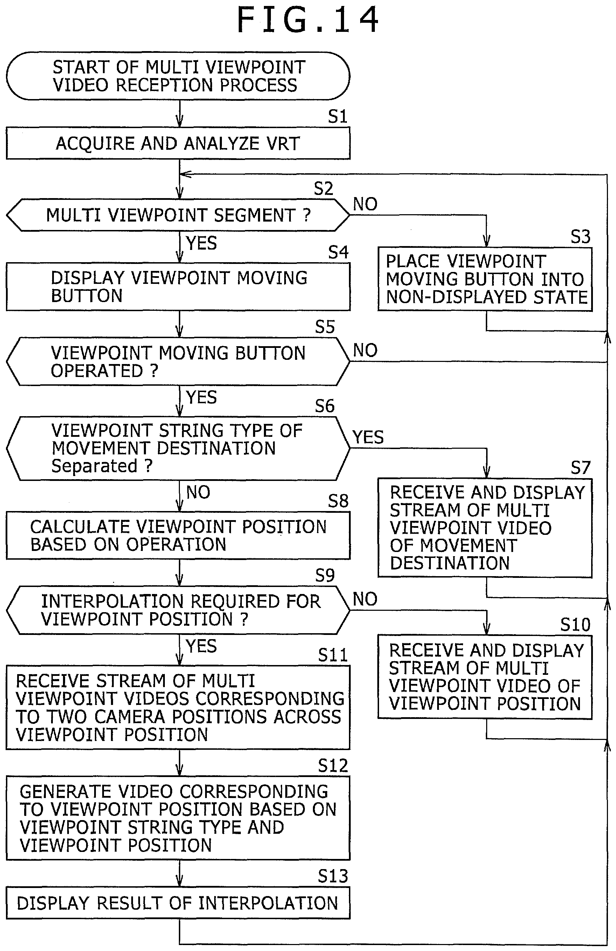

   FIG. 14 is a flow chart illustrating a multi viewpoint video reception process.
[FIG. 15]

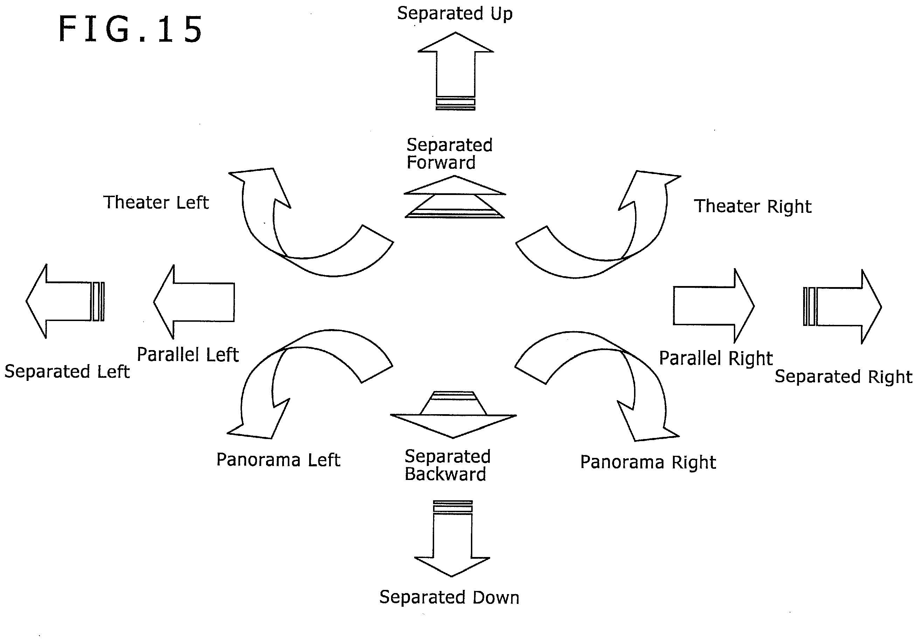

   FIG. 15 is a view showing an example of a viewpoint moving button.
[FIG. 16]

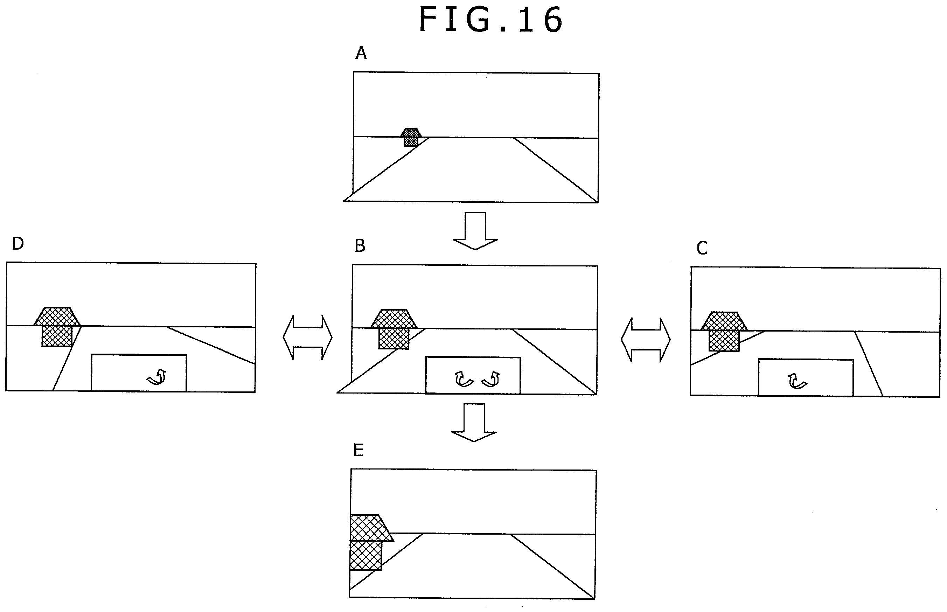

   FIG. 16 is a view illustrating a screen image transition which appears in response to an operation for the viewpoint moving button.
[FIG. 17]

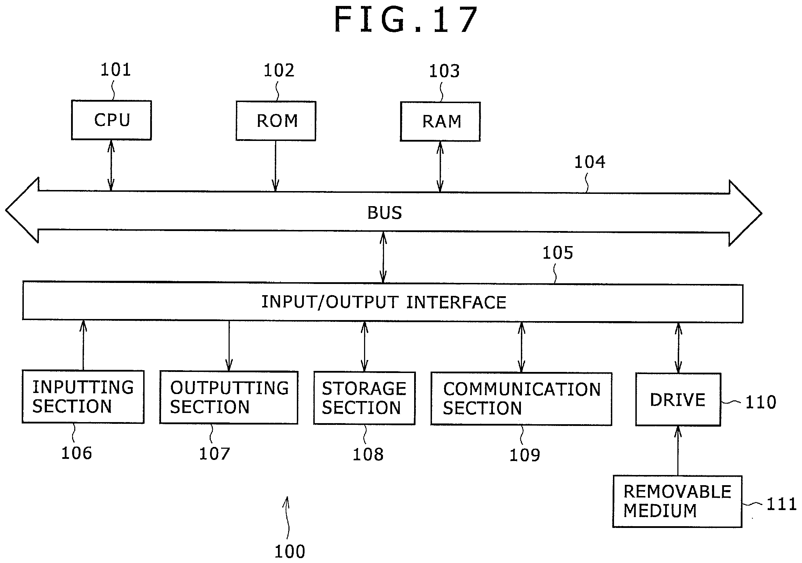

   FIG. 17 is a block diagram showing an example of a configuration of a computer.

### [Description of Embodiments]

In the following, the best mode (hereinafter referred to as embodiment) for carrying out the present disclosure is described in detail with reference to the drawings.

### <1. Embodiment>

### [Outline of the Multi viewpoint Video Content Viewing System]

An outline of a multi viewpoint video content viewing system which is an embodiment of the present disclosure is described. The multi viewpoint video content viewing system makes it possible to configure one piece of video content from a plurality of viewpoint videos imaged from a plurality of different camera positions. Further, the multi viewpoint video content viewing system makes it possible for the reception side to cut out an arbitrary range from the viewpoint videos or connect or interpolate a plurality of viewpoint videos so that a video in a state in which it is imaged from an arbitrary viewpoint can be viewed. A plurality of viewpoint videos which configure the multi viewpoint video content need not necessarily be same with each other in resolution or coding format.

It is to be noted that multi viewpoint video content may be configured from a plurality of viewpoint videos over an overall period or may be configured from a plurality of viewpoint videos only within part of the period thereof.

Multi viewpoint video content configured from a plurality of viewpoint videos is retained on the transmission side, and from among the viewpoint videos which configure the multi viewpoint video content, one viewpoint video which represents the multi viewpoint video content and by which, for example, an image pickup object is imaged from the front is determined as a default (entry) video. Individual viewpoint videos are broadcast or distributed through transmission paths different from each other (in a Broadcast Stream in a television broadcast and an Internet Stream in network distribution).

Relations of a plurality of viewpoint videos which configure multi viewpoint video content are classified into four different viewpoint string types, namely, View Relation Type = 1 (panorama), View Relation Type = 2 (Theater), View Relation Type = 3 (Parallel) and View Relation Type 4 = (Separated).

FIG. 1 illustrates a situation upon imaging of multi viewpoint video content configured from a viewpoint string of View Relation Type = 1 (Program). In this instance, the multi viewpoint video content is obtained by disposing a plurality of video cameras at the same camera point and imaging in directions different from each other at the same time by the video cameras. In the case of FIG. 1, the overall range of 360 degrees is equally divided into eight regions, and the regions are imaged at the same time from the same camera position C0 to C7. By the imaging, a viewpoint string of viewpoint videos V0 to V7 of View Relation Type = 1 (Panorama) is obtained.

It is to be noted that, where video content is configured from a viewpoint string of Panorama, a viewpoint string for the overall circumference of 360 degrees need not necessarily be prepared. For example, multi viewpoint video content may be configured from a viewpoint string for a half circumference of 180 degrees or the like centered at the same camera position. Further, also the number of video cameras to be used for imaging may be determined arbitrarily. If a smaller number of video cameras are used to increase the image pickup angle of view per one video camera, then the execution frequency of a process for connecting two viewpoints to each can be reduced on the reception side. On the contrary, if a greater number of video cameras are used to decrease the image pickup angle of view per one video camera, then picture quality degradation such as distortion which may possibly occur with an interpolation video can be suppressed.

FIG. 2 illustrates a state in which the viewpoint strings V0 to V7 of Panorama which configure the video content are connected to each other in a horizontal direction.

On the reception side, not only it is possible to selectively view one of the viewpoint strings V0 to V7 but also it is possible to designate a picture frame spanning between the two viewpoint strings V2 and V3 and view a video within the picture frame. For example, if a viewing picture frame which occupies only the viewpoint video V4 as shown in the figure is designated, then only the viewpoint video V4 is received and decoded. On the other hand, if a viewing picture frame spanning between the viewpoint videos V2 and V3 is designated, then the viewpoint videos V2 and V3 are received and decoded and a viewing picture frame is cut out.

FIG. 3 illustrates a situation upon imaging of multi viewpoint video content configured from a viewpoint string of View Relation Type = 2 (Theater). In this instance, the multi viewpoint video content is obtained by providing a plurality of camera positions (viewpoints) on a circle surrounding an image pickup object and imaging the image pickup object at the same time from the camera positions. In the case of this figure, the viewpoint strings V0 to V8 of Theater are obtained by providing nine camera positions C0 to C8 on a circle surrounding the image pickup object and imaging the image pick object at the same time from the camera positions C0 to C8, respectively.

On the reception side, not only it is possible to view one of the viewpoint strings V0 to V8 imaged from the camera positions C0 to C8 different from each other on the same circle but also it is possible to interpolate a video, which is in a state obtained by imaging from an arbitrary position of the same circle different from the camera positions C0 to C8 and view the interpolated video. For example, in order to view a video in a state in which it is imaged from between the camera position C2 and the camera position C4, the viewpoint videos V2 and V4 are received and decoded, and a desired video is generated by an interpolation process using the decoded viewpoint videos V2 and V4.

FIG. 4 illustrates a situation upon imaging of multi viewpoint video content configured from a viewpoint string of View Relation Type = 3 (Parallel). In this instance, the multi viewpoint video content is obtained by providing a plurality of camera positions (viewpoints) on a straight line opposing to an image pickup object and imaging the image pickup object at the same time from the camera positions such that the imaging directions may be parallel to each other. In the case of this figure, viewpoint strings V0 to V4 of Parallel are obtained by providing five camera positions C0 to C4 on a straight line and imaging the image pick object at the same time from the camera positions C0 to C4, respectively.

On the reception side, not only it is possible to view one of the viewpoint strings V0 to V4 imaged from the camera positions C0 to C4 different from each other on the straight line but also it is possible to interpolate a video, which is in a state obtained by imaging from an arbitrary position linearly different from the camera positions C0 to C4 and view the interpolated video. For example, in order to view a video in a state in which it is imaged from between the camera position C1 and the camera position C2, the viewpoint videos V1 and V2 are received and decoded, and a desired video is generated by an interpolation process using the decoded viewpoint videos V1 and V2.

FIG. 5 illustrates a situation upon imaging of multi viewpoint video content configured from a viewpoint string of View Relation Type = 4 (Separated). In this instance, the multi viewpoint video content is obtained by imaging an image pickup object from a camera position provided discretely and irregularly from the other camera positions. In the case of this figure, from among five camera positions C0, C1, C2, C10 and C20, the camera positions C0, C1 and C2 are disposed on the same circle while the camera position C10 is disposed above the camera position C0 and the camera position C20 is provided irregularly and discretely. Therefore, the viewpoint string types of the viewpoint strings V10 and V20 imaged from the camera positions C10 and C20 become Separated.

It is to be noted that one piece of multi viewpoint video content may be configured such that a plurality of viewpoint strings of different viewpoint string types are included in a mixed manner.

### [Example of the Configuration of the Multi Viewpoint Video Content Viewing System]

Now, an example of a configuration of the multi viewpoint video content viewing system which is an embodiment of the present disclosure is described.

FIG. 6 shows an example of a configuration of the multi viewpoint video content viewing system according to the embodiment of the present disclosure.

This multi viewpoint video content viewing system 10 is configured from a transmission apparatus 20, and reception apparatuses 30-1 to 30-n connected to the transmission apparatus 20 through the Internet 11. In the following description, in the case where there is no necessity to individually distinguish the reception apparatuses 30-1 to 30-n, each of them is referred to merely as reception apparatus 30.

The transmission apparatus 20 includes a content retention section 21, a VRT generation section 22, a broadcasting section 23, and a transmission section 24.

The content retention section 21 retains multi viewpoint video content configured from a plurality of viewpoint videos. The VRT generation section 22 generates a VRT (View Relation Table) necessary for the reception side to receive the viewpoint videos and outputs the VRT to the broadcasting section 23 or the transmission section 24.

The VRT includes information such as a viewpoint string type of each of a plurality of viewpoint videos which configure the multi viewpoint video content and an acquisition destination URL (URL of a Broadcast Stream or an Internet stream). It is to be noted that details of the VRT are hereinafter described with reference to FIGS. 7 to 12.

The broadcasting section 23 reads out a predetermined one (for example, a default (entry) viewpoint video or the like) of a plurality of viewpoint videos which configure the multi viewpoint video content and are retained in the content retention section 21 and broadcasts the predetermined viewpoint video as a Broadcast Stream. In other words, the broadcasting section 23 broadcasts the predetermined viewpoint video as a television program through a broadcasting network 12. Further, the broadcasting section 23 places the generated VRT to a predetermined position of the broadcasting signal and broadcasts the broadcasting signal.

The transmission section 24 reads out a predetermined one (one imaged from a representative camera position such as a viewpoint video other than the default (entry) viewpoint video) of the viewpoint videos which configure the multi viewpoint video content and are retained in the content retention section 21, and distributes the predetermined viewpoint video as an Internet Stream through the Internet 11. Further, in accordance with a request from a reception apparatus 30-i, the transmission section 24 transmits the generated VRT to the reception apparatus 30-i of the requesting source through the Internet 11.

It is to be noted that all viewpoint videos which configure the multi viewpoint video content may be broadcast as a Broadcast Stream through the broadcasting network 12. On the contrary, all viewpoint videos which configure the multi viewpoint video content may be distributed as an Internet Stream through the Internet 11. Or all or some of the viewpoint videos which configure the multi viewpoint video content may be supplied to the reception side in a state in which they are recorded on a storage medium such as a BD (blu-ray disc).

### [VRT]

FIG. 7 illustrates a transmission timing of a VRT in the case where the multi viewpoint video content within an overall period is configured from a plurality viewpoint videos.

In this instance, one VRT is prepared for the video content. It is necessary for this VRT to be supplied to the reception side only before broadcasting of the video content is started. In particular, the VRT or reference information including an acquisition destination of the VRT may be described in an EIT (Event Information Table) or a PMT (Program Map Table) of the television broadcasting signal.

It is to be noted that, in the case where all viewpoint videos which configure the multi viewpoint video content are to be distributed through the Internet 11, a notification of the VRT and reference information including an acquisition destination of the VRT may be issued as a kind of a meta file to be acquired before the video content is reproduced such as, for example, CAD or ERI (Entry Resource Information) to the reception side.

FIG. 8 illustrates a transmission timing of a VRT in the case where the video content in some periods is configured from multi viewpoint videos, namely, a plurality of viewpoint videos.

In this instance, a VRT is prepared for each of two periods (each hereinafter referred to as multi viewpoint segment) in which a multi viewpoint video is configured from a plurality of viewpoint videos. Each of the VRTs may be supplied to the reception side before a starting timing of the multi viewpoint segment. In particular, reference information including an acquisition destination of the VRT corresponding to the segment may be described in the PMT of the television broadcasting signal.

It is to be noted that, in the case where all viewpoint videos which configure the multi viewpoint video content are to be distributed through the Internet 11, a notification of the VRT and the reference information including the acquisition designation of the VRT may be issued to the reception side as a kind of a metal file (for example, a CAD or an ERI) to be acquired before the video content is reproduced.

FIG. 9 illustrates an example of reference information including an acquisition destination of a VRT supplied to the reception side, and FIG. 10 illustrates an example of a particular description of the reference information.

A number of Multi viewpoints equal to the number of multi viewpoint segments of one piece of video content are provided. For example, in the case of FIG. 8, two Multi viewpoints are described.

In the Multi viewpoints, three elements of @startNPT, @endNPT and @info are provided. In the @startNPT, a starting time position of the multi viewpoint segment is described in NPT (Normal Play Time). In the @endNPT, an ending time position of the multi viewpoint segment is described in NPT. In the @info, a URL indicative of an acquisition destination of the corresponding VRT is described.

Now, FIG. 11 illustrates an example of a VRT, and FIG. 12 illustrates an example of a description of a VRT corresponding to video content imaged in the situation illustrated in FIG. 5.

The View_object element is information relating to each of viewpoint videos which configure the multi viewpoint video content, and a number of View_object elements equal to the number of viewpoints are described. In the View_object, seven attributes of id, name, cut, format, resolution_h, resolution_v and location are provided.

In the id attribute of the View_object, identification information of the viewpoint in the multi viewpoint video is described. In the name attribute, a name of the viewpoint video is described. In the cut attribute, whether the partial cutout from the viewpoint video is permitted or prohibited is described. In the format attribute, a coding format of the viewpoint video is described. In the resolution_h attribute, a resolution of the viewpoint video in the horizontal direction is described. In the resolution_v attribute, a resolution of the viewpoint image in the vertical direction is described. In the @location, an acquisition destination URL of the viewpoint video is described.

Further, in the View_object element, a neighbor_view element indicative of information relating to a viewpoint video imaged at a camera position neighboring with the camera position at which the viewpoint video corresponding to the View_object is imaged is described as a child element. In the neighbor_view element, four attributes of an id attribute, a type attribute, a direction attribute and a distance attribute are provided.

In the id attribute of the neighbor_view element, identification information of a viewpoint video (hereinafter referred to as neighboring viewpoint video) imaged at a camera position neighboring with the camera position at which a viewpoint video corresponding to the View_object element of the parent element is imaged is described. In the type attribute, a viewpoint string type between the neighboring viewpoints is described. In the direction attribute, a direction of the camera position at which the neighboring viewpoint video is imaged with respect to the camera position at which the multi viewpoint video corresponding to the View_object element is imaged is described. In the distance attribute, a distance or an angle of the camera position at which the neighboring viewpoint video is imaged with respect to the camera position at which the multi viewpoint video corresponding to the View_object element is imaged is described.

### [Example of the Configuration of the Reception Apparatus 30]

FIG. 13 shows an example of a configuration of the reception apparatus 30. The reception apparatus 30 includes an operation inputting section 31, a control section 32, a tuner 33, a demultiplexing section (DEMUX) 34, video decoders 35-1 and 35-2, audio decoders 36-1 and 36-2, a video processing section 37, an audio processing section 38, a communication interface (I/F) 39, a VRT analysis section 40, streaming reception sections 41-1 and 41-2 and a synchronization controlling section 42.

The operation inputting section 31 is configured, for example, from a remote controller and a corresponding reception section (both not shown) and accepts an operation of a user and then issues a notification of the accepted operation to the control section 32. In particular, the operation inputting section 31 accepts an operation of the user of selecting video content, designating a position or a size of a picture frame of the video content or designating a viewpoint (camera position) and notifies the control section 32 of the accepted operation.

The control section 32 controls the components of the reception apparatus 30 in accordance with an operation of the user inputted using the operation inputting section 31. The tuner 33 receives a broadcasting signal (Broadcast Stream) of a default (entry) viewpoint video from a television broadcasting signal broadcast through the broadcasting network 12 and outputs the received broadcasting signal to the demultiplexing section 34. The streaming reception sections 41-1 and 41-2 receive streaming data (Internet Stream) of a multi viewpoint video from the transmission apparatus 20 through the communication I/F 39 and the Internet 11, correspondingly, and output the accepted streaming data to the demultiplexing section 34.

The demultiplexing section 34 demultiplexes a VRT or reference information for acquiring the VRT included in the PMT, EIT or the like from the broadcasting signal inputted from the tuner 33 and supplies the VRT or the reference information to the VRT analysis section 40. Further, the demultiplexing section 34 demultiplexes video coded data and audio coded data from the broadcasting signal inputted from the tuner 33 and the streaming data inputted from the streaming reception section 41. It is to be noted that it is assumed that the demultiplexing section 34 can process streaming data of at least two systems at the same time. The demultiplexed video coded data are inputted to the video decoder 35-1 or 35-2 and the demultiplexed audio coded data are inputted to the audio decoder 36-1 or 36-2.

The video decoders 35-1 and 35-2 decode the video coded data inputted thereto and output a video signal of videos of different viewpoints obtained by the decoding to the video processing section 37. The audio decoders 36-1 and 36-2 decode the audio coded data inputted thereto and output an audio signal of different viewpoints obtained by the decoding to the audio processing section 38.

The video processing section 37 generates a video signal to be presented of the user by connecting two video signals (corresponding to two viewpoint videos at camera positions neighboring with each other) inputted from the video decoders 35-1 and 35-2 and cutting out a predetermined region of the connected signal, interpolating a video corresponding to an arbitrary viewpoint or superposing a video of an operation button or the like serving as a user interface. Then, the video processing section 37 outputs the generated video signal to a monitor (not shown) at the succeeding stage. The audio processing section 38 generates an audio signal to be presented of the user by synthesizing two audio signals (corresponding to two viewpoint videos at camera positions neighboring with each other) inputted from the audio decoders 36-1 and 36-2. Then, the audio processing section 38 outputs the generated audio signal to a monitor (not shown) at the succeeding stage.

The communication I/F 39 is connected to the transmission apparatus 20 through the Internet 11.

The VRT analysis section 40 acquires, when reference information for acquiring a VRT is supplied thereto from the demultiplexing section 34, a VRT from the transmission apparatus 20 through the communication I/F 39 and the Internet 11 in accordance with the reference information. Further, the VRT analysis section 40 analyzes the VRT supplied thereto from the demultiplexing section 34 or acquired by the VRT analysis section 40 itself and outputs a result of the analysis to the control section 32.

The synchronization controlling section 42 controls the video decoders 35-1 and 35-2, audio decoders 36-1 and 36-2, video processing section 37, audio processing section 38 and streaming reception sections 41-1 and 41-2 so that they are synchronized with each other.

### [Description of Operation]

FIG. 14 is a flow chart illustrating a multi viewpoint video reception process by the reception apparatus 30.

It is assumed that the reception apparatus 30 has already received a default viewpoint video of video content being broadcast as a television program through the broadcasting network 12.

At step S1, the VRT analysis section 40 receives reference information of the VRT and the VRT supplied thereto from the demultiplexing section 34 or acquires reference information of the VRT and the VRT by the VRT analysis section 40 itself, analyzes the VRT and outputs a result of the analysis to the control section 32. At step S2, the control section 32 decides whether or not the progress position of the video content being received is a multi viewpoint segment.

If it is decided that the progress position of the video content being received is not a multi viewpoint segment, then the processing is advanced to step S3. At step S3, the video processing section 37 places, if a viewpoint moving button is displayed on an image of the video content being received, the viewpoint moving button into a non-displaying state under the control of the control section 32. If a viewpoint moving button is not displayed, then the video processing section 37 carries out nothing. Thereafter, the processing returns to step S2 so that the processes at the steps beginning with step S2 are repeated.

If it is decided at step S2 that the progress position of the video content being received is a multi viewpoint segment, then the processing is advanced to step S4. At step S4, the video processing section 37 causes, if a viewpoint moving button is not displayed on the video of the video content being received, then a viewpoint moving button to be displayed under the control of the control section 32. If the viewpoint moving button is displayed, then the display is maintained.

Here, a viewpoint moving button displayed on the video of the video content is described. FIG. 15 shows an example of 12 different viewpoint moving buttons. It is to be noted that which one of the viewpoint moving buttons is to be displayed is decided by referring to the VRT and based on the type attribute and the direction attribute of the neighbor_view element included in the View_object element of the viewpoint video being received. In the case where the viewpoint string type is Panorama, Theater or Parallel, the moving amount of the viewpoint is determined in response to a period of time for depression or to a number of times of depression of the corresponding viewpoint moving button.

Referring back to FIG. 14, at step S5, the control section 32 decides based on an input from the operation inputting section 31 whether or not the viewpoint moving button is operated by the user. If the viewpoint moving button is not operated, then the processing returns to step S2 so that the processes at the steps beginning with step S2 are repeated.

If it is decided at step S5 that the viewpoint moving button is operated, then the processing advances to step S6. At step S6, the control section 32 decides based on the operated viewpoint moving button whether or not the viewpoint string type to the viewpoint video of the movement destination is Separated. If the viewpoint string type is Separated, then the processing is advanced to step S7. At step S7, the control section 32 controls the pertaining components to receive and decode the viewpoint video of the movement destination and output the video signal to the succeeding stage. Thereafter, the processing returns to step S2 so that the processes at the steps beginning with step S2 are repeated.

If it is decided at step S6 that the viewpoint string type to the viewpoint video of the movement destination is not Separated, then the processing is advanced to step S8. At step S8, the control section 32 calculates the movement amount of the viewpoint based on a period of time of depression or a number of times of depression of the viewpoint moving button to determine the viewpoint position of the movement destination.

At step S9, the control section 32 decides based on the VRT whether or not a viewpoint video imaged actually exists at the viewpoint position of the movement destination thereby to decide whether or not the viewpoint position of the movement destination requires interpolation.

If it is decided that an actually imaged viewpoint video exists at the viewpoint position of the movement destination and then decides that the viewpoint position of the movement destination does not require interpolation, then the processing is advanced to step S10. At step S10, the control section 32 controls the pertaining components to receive and decode a viewpoint video corresponding to the viewpoint position of the movement destination and output the video signal to the succeeding stage. Thereafter, the processing returns to step S2 so that the processes at the steps beginning with step S2 are repeated.

If it is decided at step S9 that an actually imaged viewpoint video does not exist at the viewpoint position of the movement destination and therefore decides that the viewpoint position of the movement destination requires interpolation, then the processing is advanced to step S11. At step S11, the control section 32 controls the pertaining components to receive and decode two multi viewpoint videos imaged at actual camera positions positioned across the viewpoint position of the movement destination and output two video signals to the video processing section 37. At step S12, the video processing section 37 generates, based on the viewpoint string type and the viewpoint positions of the two video signals inputted thereto, a video in a state in which it is imaged at the viewpoint position and outputs a resulting video signal to the succeeding stage so as to be displayed.

In particular, for example, if the viewpoint string type of the two video signals is Panorama or Parallel, then the two video signals are connected to each other in the horizontal direction and a picture frame corresponding to the viewpoint position is cut out. On the other hand, for example, if the viewpoint string type of the two video signals is Theater, then a video corresponding to the viewpoint position is generated by an interpolation process based on the two video signals. It is to be noted that, although an arbitrary technique can be used for the interpolation process, for example, the technique proposed as Japanese Patent Application No. 2010-274808 by the applicant of the present application may be applied.

Thereafter, the processing returns to step S2 so that the processes at the steps beginning with step S2 are repeated. The description of the multi viewpoint video reception process ends therewith.

FIG. 16 illustrates an example of a screen image transition in response to an operation of a user for a viewpoint moving button in the multi viewpoint video reception process.

For example, if the progress position of video content comes to a multi viewpoint segment while such a default (entry) multi viewpoint video as shown in A of this figure is being received, then a viewpoint moving button or buttons are displayed on the default (entry) multi viewpoint video as shown in B of this figure. In the case of B of this figure, the viewpoint string type is Theater and viewpoint moving buttons by which the viewpoint position can be moved to the left side and the right side are displayed.

If the user operates the left side viewpoint moving button on the screen display of B of this figure, then the video of the screen is changed into a state in which the viewpoint position has moved leftwardly on the concentric circle. On the screen display after the change, a viewpoint moving button wherein the viewpoint string type is Theater and which can move the viewpoint position to the right side, namely, which can restore the screen display of B of this figure, is displayed. On the contrary, if the user operates the right side viewpoint moving button on the screen display of B of this figure, then the video on the screen is changed into a state in which the viewpoint position has move to the right side on the concentric circuit. On the screen after the change, a viewpoint moving button wherein the viewpoint string type is Theater and which can move the viewpoint position to the left side, namely, which can restore the state of B of this figure, is displayed.

Thereafter, if the progress position of the video content is displaced from the multi viewpoint segment, then the display image of the viewpoint moving button erased as shown in E of this figure.

By the multi viewpoint video content viewing system described above, for example, the following scenarios can be implemented.

### Scenario 1

From above a four-wheel drive vehicle which runs on the savannah of Kenya, an overall circumference of 360 degrees is imaged and broadcast as a multi viewpoint video of the viewpoint string type Panorama. A viewer of this program can change the video to that in an arbitrary direction or the like and find out a wild animal existing therearound.

### Scenario 2

A show played in the Amphitheater in Las Vegas is imaged as a multi viewpoint video, whose viewpoint string type is Theater, by video cameras disposed at fixed distances along a central path provided circumferentially in bleachers. Then, the imaged multi viewpoint video is broadcast. A viewer of this program can view the video in a state in which the viewer looks at the stage from an arbitrary position of the central path.

Incidentally, while the series of processes described above can be executed by hardware, it may otherwise be executed by software. In the case where the series of processes is executed by software, a program which constructs the software is installed from a program recording medium into a computer incorporated in hardware for exclusive use or, for example, a personal computer for universal use or the like which can execute various functions by installing various programs.

FIG. 17 is a block diagram showing an example of a configuration of a computer which executes the series of processes described hereinabove in accordance with a program.

In this computer 100, a CPU (Central Process Unit) 101, a ROM (Read Only Memory) 102 and a RAM (Random Access Memory) 103 are connected to each other by a bus 104.

Further, an input/output interface 105 is connected to the bus 104. To the input/output interface 105, an inputting section 106 including a keyboard, a mouse, a microphone and so forth, an outputting section 107 including a display unit, a speaker and so forth, a storage section 108 configured from a hard disk, a nonvolatile memory and so forth, a communication section 109 including a network interface and so forth, and a drive 110 for driving a removable medium 111 such as a magnetic disk, an optical disk, a magneto-optical disk, a semiconductor memory and so forth are connected.

In the computer 100 configured in such a manner as described above, the CPU 101 loads a program stored, for example, in the storage section 108 into the RAM 103 through the input/output interface 105 and the bus 104 and executes the program to carry out the series of processes described hereinabove.

It is to be noted that the program executed by the computer may be a program by which the processes are carried out in a time series in accordance with the order described in the present specification or may be a program by which the processes are carried out in parallel or at necessary timings such as a timing at which the program is called.

Or, the program may be processed by a single computer or may be processed in a distributed fashion by a plurality of computers. Further, the program may be transferred to and executed by a remote computer.

Further, in the present specification, the term system represents an entire apparatus configured from a plurality of apparatus.

### [Reference Signs List]

10 Multi viewpoint video content viewing system, 11 Internet, 12 Broadcasting network, 20 Transmission apparatus, 21 Content retention section, 22 VRT generation section, 23 Broadcasting section, 24 Transmission section, 30 Reception apparatus, 31 Operation inputting section, 32 Control section, 33 Tuner, 34 Demultiplexing section, 35 Video decoder, 36 Audio decoder, 37 Video processing section, 38 Audio processing section, 39 Communication I/F, 40 VRT analysis section, 41 Streaming reception section, 42 Synchronization controlling section

## Claims

1. A content transmission apparatus, comprising:
a retention section (21) configured to retain multi viewpoint video content configured from a plurality of viewpoint videos imaged at the same time by a plurality of video cameras different from each other;
a generation section (22) configured to generate a View Relation Table, VRT, including acquisition destination information of each of the plurality of viewpoint videos which configure the multi viewpoint video content, the acquisition destination information indicating a URL for acquiring the respective viewpoint video, and further including, for each of the plurality of viewpoint videos, a direction information indicating a direction of the camera position at which a neighboring viewpoint video is imaged with respect to the camera position at which a viewpoint video is imaged and/or a distance information indicating a distance or an angle of the camera position at which the neighboring viewpoint video is imaged with respect to the camera position at which the viewpoint image is imaged;
a supplying section (23, 24) configured to supply the generated VRT to a content reproduction apparatus;
a broadcasting section (23) configured to broadcast a single one or plural ones of the viewpoint videos which configure the retained multi viewpoint video content; and
a distribution section (24) configured to distribute a single one or plural ones of the viewpoint videos which configure the retained multi viewpoint video content through a network by use of the URL of the respective viewpoint video.

2. A content transmission method of a content transmission apparatus which supplies multi viewpoint video content configured from a plurality of viewpoint videos imaged at the same time by a plurality of video cameras different from each other to a content reproduction apparatus, comprising:
by the content transmission apparatus,
a generation step of generating a View Relation Table, VRT, including acquisition destination information of each of the plurality of viewpoint videos which configure the multi viewpoint video content, the acquisition destination information indicating a URL for acquiring the respective viewpoint video, and further including, for each of the plurality of viewpoint videos, a direction information indicating a direction of the camera position at which a neighboring viewpoint video is imaged with respect to the camera position at which a viewpoint video is imaged and/or a distance information indicating a distance or an angle of the camera position at which the neighboring viewpoint video is imaged with respect to the camera position at which the viewpoint image is imaged;
a supplying step of supplying the generated VRT to the content reproduction apparatus;
a broadcasting step of broadcasting a single one or plural ones of the viewpoint videos which configure the retained multi viewpoint video content; and
a distribution step of distributing a single one or plural ones of the viewpoint videos which configure the retained video content through a network by use of the URL of the respective viewpoint video.

3. A content reproduction apparatus which reproduces multi viewpoint video content configured from a plurality of viewpoint videos imaged at the same time by a plurality of video cameras different from each other, comprising:
an acquisition section (40) configured to acquire a View Relation Table, VRT, including acquisition destination information of each of the plurality of viewpoint videos which configure the multi viewpoint video content, the acquisition destination information indicating a URL for acquiring the respective viewpoint video, and further including, for each of the plurality of viewpoint videos, a direction information indicating a direction of the camera position at which a neighboring viewpoint video is imaged with respect to the camera position at which a viewpoint video is imaged and/or a distance information indicating a distance or an angle of the camera position at which the neighboring viewpoint video is imaged with respect to the camera position at which the viewpoint image is imaged;
an inputting section (31) configured to input a viewpoint moving operation;
a reception section configured to receive, from among a plurality of viewpoint videos which configure the multi viewpoint video content, the plurality of viewpoint videos corresponding to the inputted viewpoint moving operation based on the VRT, the reception section including
a broadcast reception section (33) configured to receive a single one or plural ones of the viewpoint videos which configure the retained multi viewpoint video content via broadcast and
a streaming reception section (39, 44-1, 44-2) configured to receive a single one or plural ones of the viewpoint videos which configure the retained video content through a network by use of the URL of the respective viewpoint video; and
a generation section (37) configured to generate a video corresponding to the viewpoint moving operation based on the plurality of received viewpoint videos.

4. A content reproduction method of a content reproduction apparatus which reproduces multi viewpoint video content configured from a plurality of viewpoint videos imaged at the same time by a plurality of video cameras different from each other, comprising:
by the content reproduction apparatus,
an acquisition step of acquiring a View Relation Table, VRT, including acquisition destination information of each of the plurality of viewpoint videos which configure the multi viewpoint video content, the acquisition destination information indicating a URL for acquiring the respective viewpoint video, and further including, for each of the plurality of viewpoint videos, a direction information indicating a direction of the camera position at which a neighboring viewpoint video is imaged with respect to the camera position at which a viewpoint video is imaged and/or a distance information indicating a distance or an angle of the camera position at which the neighboring viewpoint video is imaged with respect to the camera position at which the viewpoint image is imaged;
an inputting step of inputting a viewpoint moving operation;
a reception step of receiving, from among a plurality of viewpoint videos which configure the multi viewpoint video content, the plurality of viewpoint videos corresponding to the inputted viewpoint moving operation based on the VRT, the reception step including
a broadcast reception step of receiving a single one or plural ones of the viewpoint videos which configure the retained multi viewpoint video content via broadcast and
a streaming reception step of receiving a single one or plural ones of the viewpoint videos which configure the retained video content through a network by use of the URL of the respective viewpoint video; and
a generation step of generating a video corresponding to the viewpoint moving operation based on the plurality of received viewpoint videos.

5. The content reproduction apparatus according to claim 3 or the content reproduction method according to claim 4, wherein
the acquired VRT further includes a viewpoint string type representative of a relation between each of viewpoint videos which configure the video content and a neighboring viewpoint video imaged in the neighborhood of the viewpoint video.

6. The content reproduction apparatus or the content reproduction method according to claim 5, wherein
the viewpoint string type is one of Panorama, Theater, Parallel and Separated.

7. The content reproduction apparatus or the content reproduction method according to claim 6, wherein
the generation section or the generation step is configured to connect, when the viewpoint string type of the plurality of received viewpoint videos is Panorama or Parallel, the plurality of received viewpoint videos and cut out a predetermined region to generate a video corresponding to the viewpoint moving operation.

8. The content reproduction apparatus or the content reproduction method according to claim 6, wherein
the generation section or the generation step is configured to generate, when the viewpoint string type of the plurality of received viewpoint videos is Theater, a video corresponding to the viewpoint moving operation by an interpolation in which the plurality of received viewpoint videos are used.

9. The content reproduction apparatus or the content reproduction method according to claim 8, wherein
the viewpoint moving operation is associated with moving forward, moving backward, moving up, moving down, moving left and/or moving right.

10. The content reproduction apparatus according to any one of claims 3 or 5 to 9 or the content reproduction method according to any one of claims 4 to 9, wherein
the reception section or the reception step is configured to receive from a broadcasting signal, or acquire from a content transmission apparatus through a communication network, from among a plurality of viewpoint videos which configure the multi viewpoint video content, the plurality of viewpoint videos corresponding to the inputted viewpoint moving operation.

11. The content reproduction apparatus according to any one of claims 3 or 5 to 10 or the content reproduction method according to any one of claims 4 to 10, wherein
the inputting section or the inputting step includes a viewpoint moving button corresponding to the viewpoint string type of a neighboring viewpoint video included in the acquired VRT and imaged in the neighborhood of each of viewpoint videos which configure the multi viewpoint video content.

12. The content reproduction apparatus according to any one of claims 3 or 5 to 11 further comprising a television broadcast tuner configured to receive a digital broadcast signal including one of the plurality of multi-view videos.

13. The content reproduction apparatus according to any one of claims 3 or 5 to 12, further comprising a display unit.

14. A program for causing a content transmission apparatus of claim 1 to perform the method of claim 2 when said program is carried out by the content transmission apparatus.

15. A program for causing a content reproduction apparatus of any one of claims 3 or 5 to 13 to perform the method of any one of claims 4 to 11 when said program is carried out by the content reproduction apparatus.

## Patentansprüche

1. Inhaltsübertragungsvorrichtung umfassend:
einen Aufbewahrungsabschnitt (21), der so konfiguriert ist, dass er Mehrfachansichtspunkt-Videoinhalt aufbewahrt, der aus einer Vielzahl von Ansichtspunkt-Videos konfiguriert ist, die gleichzeitig von einer Vielzahl von Videokameras, die sich voneinander unterscheiden, abgebildet sind;
einen Erzeugungsabschnitt (22), der so konfiguriert ist, dass er eine Ansichtsbeziehungstabelle (View Relation Table, VRT) erzeugt, die Erfassungszielinformationen von jedem der Vielzahl von Ansichtspunkt-Videos enthält, die den Mehrfachansichtspunkt-Videoinhalt konfigurieren, wobei die Erfassungszielinformationen eine URL zum Erfassen des jeweiligen Ansichtspunkt-Videos anzeigen, und die ferner für jedes der Vielzahl von Ansichtspunkt-Videos eine Richtungsinformation, die eine Richtung der Kameraposition angibt, bei der ein Video eines benachbarten Blickpunktes in Bezug auf die Kameraposition, bei der ein Ansichtspunkt-Video abgebildet ist, abgebildet ist, und/oder eine Abstandsinformation enthält, die einen Abstand oder einen Winkel der Kameraposition, bei der das benachbarte Ansichtspunkt-Video abgebildet ist, in Bezug auf die Kameraposition, bei der das Ansichtspunkt-Bild abgebildet ist, angibt;
einen Versorgungsabschnitt (23, 24), der so konfiguriert ist, dass er die erzeugte VRT an eine Inhaltswiedergabevorrichtung liefert;
einen Sendeabschnitt (23), der so konfiguriert ist, dass er ein einzelnes oder mehrere der Ansichtspunkt-Videos sendet, die den aufbewahrten Mehrfachansichtspunkt-Videoinhalt konfigurieren; und
einen Verteilungsabschnitt (24), der so konfiguriert ist, dass er ein einzelnes oder mehrere der Ansichtspunkt-Videos verteilt, die den aufbewahrten Mehrfachansichtspunkt-Videoinhalt über ein Netzwerk unter Verwendung der URL des jeweiligen Ansichtspunkt-Videos konfigurieren.

2. Inhaltsübertragungsverfahren einer Inhaltsübertragungsvorrichtung, die Mehrfachansichtspunkt-Videoinhalt, der aus einer Vielzahl von Ansichtspunkt-Videos konfiguriert ist, die gleichzeitig von einer Vielzahl von Videokameras, die sich voneinander unterscheiden, abgebildet sind, an eine Inhaltswiedergabevorrichtung liefert, umfassend:
durch die Inhaltsübertragungsvorrichtung,
einen Erzeugungsschritt zum Erzeugen einer Ansichtsbeziehungstabelle (View Relation Table, VRT), die Erfassungszielinformationen von jedem der Vielzahl von Ansichtspunkt-Videos enthält, die den Mehrfachansichtspunkt-Videoinhalt konfigurieren, wobei die Erfassungszielinformationen eine URL zum Erfassen des jeweiligen Ansichtspunkt-Videos anzeigen, und die ferner für jedes der Vielzahl von Ansichtspunkt-Videos eine Richtungsinformation, die eine Richtung der Kameraposition angibt, bei der ein Video eines benachbarten Blickpunktes in Bezug auf die Kameraposition, bei der ein Ansichtspunkt-Video abgebildet ist, abgebildet ist, und/oder eine Abstandsinformation enthält, die einen Abstand oder einen Winkel der Kameraposition, bei der das benachbarte Ansichtspunkt-Video abgebildet ist, in Bezug auf die Kameraposition, bei der das Ansichtspunkt-Bild abgebildet ist, angibt;
einen Versorgungsschritt zum Liefern der erzeugten VRT an die Inhaltswiedergabevorrichtung liefert;
einen Sendeschritt zum Senden eines einzelnen oder mehrerer der Ansichtspunkt-Videos, die den aufbewahrten Mehrfachansichtspunkt-Videoinhalt konfigurieren; und
einen Verteilungsschritt zum Verteilen eines einzelnen oder mehrerer der Ansichtspunkt-Videos, die den aufbewahrten Mehrfachansichtspunkt-Videoinhalt über ein Netzwerk unter Verwendung der URL des jeweiligen Ansichtspunkt-Videos konfigurieren.

3. Inhaltswiedergabevorrichtung, die Mehrfachansichtspunkt-Videoinhalt wiedergibt, der aus einer Vielzahl von Ansichtspunkt-Videos konfiguriert ist, die gleichzeitig von einer Vielzahl von Videokameras, die sich voneinander unterscheiden, abgebildet sind, umfassend:
einen Erfassungsabschnitt (40), der so konfiguriert ist, dass er eine Ansichtsbeziehungstabelle (View Relation Table, VRT) erfasst, die Erfassungszielinformationen von jedem der Vielzahl von Ansichtspunkt-Videos enthält, die den Mehrfachansichtspunkt-Videoinhalt konfigurieren, wobei die Erfassungszielinformationen eine URL zum Erfassen des jeweiligen Ansichtspunkt-Videos anzeigen, und die ferner für jedes der Vielzahl von Ansichtspunkt-Videos eine Richtungsinformation, die eine Richtung der Kameraposition angibt, bei der ein Video eines benachbarten Blickpunktes in Bezug auf die Kameraposition, bei der ein Ansichtspunkt-Video abgebildet ist, abgebildet ist, und/oder eine Abstandsinformation enthält, die einen Abstand oder einen Winkel der Kameraposition, bei der das benachbarte Ansichtspunkt-Video abgebildet ist, in Bezug auf die Kameraposition, bei der das Ansichtspunkt-Bild abgebildet ist, angibt;
einen Eingabeabschnitt (31), der so konfiguriert ist, dass er eine Ansichtsbewegungsoperation eingibt;
einen Empfangsabschnitt, der so konfiguriert ist, dass er von einer Vielzahl von Ansichtspunkt-Videos, die den Mehrfachansichtspunkt-Videoinhalt konfigurieren, die Vielzahl von Ansichtspunkt-Videos, die der eingegebenen Ansichtsbewegungsoperation entsprechen, basierend auf der VRT, wobei der Empfangsabschnitt umfasst
einen Sendeempfangsabschnitt (33), der so konfiguriert ist, dass er ein einzelnes oder mehrere der Ansichtspunkt-Videos, die den aufbewahrten Mehrfachansichtspunkt-Videoinhalt konfigurieren, über Broadcast empfängt, und
einen Streamingempfangsabschnitt (39, 44-1, 44-2), der so konfiguriert ist, dass er ein einzelnes oder mehrere der Ansichtspunkt-Videos, die den aufbewahrten Mehrfachansichtspunkt-Videoinhalt über ein Netzwerk unter Verwendung der URL des jeweiligen Ansichtspunkt-Videos konfigurieren, empfängt; und
einen Erzeugungsabschnitt (37), der so konfiguriert ist, dass er ein Video erzeugt, das der Ansichtsbewegungsoperation entspricht, basierend auf der Vielzahl an empfangenen Ansichtspunkt-Videos.

4. Inhaltswiedergabeverfahren einer Inhaltswiedergabevorrichtung, die Mehrfachansichtspunkt-Videoinhalt wiedergibt, der aus einer Vielzahl von Ansichtspunkt-Videos konfiguriert ist, die gleichzeitig von einer Vielzahl von Videokameras, die sich voneinander unterscheiden, abgebildet sind, umfassend:
durch die Inhaltswiedergabevorrichtung,
einen Erfassungsschritt zum Erfassen einer Ansichtsbeziehungstabelle (View Relation Table, VRT), die Erfassungszielinformationen von jedem der Vielzahl von Ansichtspunkt-Videos enthält, die den Mehrfachansichtspunkt-Videoinhalt konfigurieren, wobei die Erfassungszielinformationen eine URL zum Erfassen des jeweiligen Ansichtspunkt-Videos anzeigen, und die ferner für jedes der Vielzahl von Ansichtspunkt-Videos eine Richtungsinformation, die eine Richtung der Kameraposition angibt, bei der ein Video eines benachbarten Blickpunktes in Bezug auf die Kameraposition, bei der ein Ansichtspunkt-Video abgebildet ist, abgebildet ist, und/oder eine Abstandsinformation enthält, die einen Abstand oder einen Winkel der Kameraposition, bei der das benachbarte Ansichtspunkt-Video abgebildet ist, in Bezug auf die Kameraposition, bei der das Ansichtspunkt-Bild abgebildet ist, angibt;
einen Eingabeschritt zum Eingeben einer Ansichtsbewegungsoperation;
einen Empfangsschritt zum Empfangen, von einer Vielzahl von Ansichtspunkt-Videos, die den Mehrfachansichtspunkt-Videoinhalt konfigurieren, die Vielzahl von Ansichtspunkt-Videos, die der eingegebenen Ansichtsbewegungsoperation entsprechen, basierend auf der VRT, wobei der Empfangsschritt umfasst
einen Sendeempfangsschritt zum Empfangen eines einzelnen oder mehrere der Ansichtspunkt-Videos, die den aufbewahrten Mehrfachansichtspunkt-Videoinhalt konfigurieren, über Broadcast, und
einen Streamingempfangsschritt zum Empfangen eines einzelnen oder mehrere der Ansichtspunkt-Videos, die den aufbewahrten Mehrfachansichtspunkt-Videoinhalt über ein Netzwerk unter Verwendung der URL des jeweiligen Ansichtspunkt-Videos konfigurieren; und
einen Erzeugungsschritt zum Erzeugen eines Videos, das der Ansichtsbewegungsoperation entspricht, basierend auf der Vielzahl an empfangenen Ansichtspunkt-Videos.

5. Inhaltswiedergabevorrichtung gemäß Anspruch 3 oder Inhaltswiedergabeverfahren gemäß Anspruch 4, wobei
die erfasste VRT ferner einen Ansichtspunkt-String-Typ umfasst, der für eine Beziehung zwischen jedem der Ansichtspunkt-Videos, die den Videoinhalt konfigurieren, und einem benachbarten Ansichtspunkt-Video, das in der Nachbarschaft des Ansichtspunkt-Videos aufgenommen wurde, repräsentativ ist.

6. Inhaltswiedergabevorrichtung oder Inhaltswiedergabeverfahren gemäß Anspruch 5, wobei
der Ansichtspunkt-String-Typ einer der Typen Panorama, Theater, Parallel und Getrennt ist.

7. Inhaltswiedergabevorrichtung oder Inhaltswiedergabeverfahren gemäß Anspruch 6, wobei
der Erzeugungsabschnitt oder der Erzeugungsschritt so konfiguriert ist, dass er, wenn der Ansichtspunkt-String-Typ der Vielzahl an empfangenen Ansichtspunkt-Videos Panorama oder Parallel ist, die Vielzahl an empfangenen Ansichtspunkt-Videos verbindet und einen vorbestimmten Bereich ausschneidet, um ein Video zu erzeugen, das der Ansichtspunktbewegungsoperation entspricht.

8. Inhaltswiedergabevorrichtung oder Inhaltswiedergabeverfahren gemäß Anspruch 6, wobei
der Erzeugungsabschnitt oder der Erzeugungsschritt so konfiguriert ist, dass er, wenn der Ansichtspunkt-String-Typ der Vielzahl der empfangenen Ansichtspunkt-Videos Theater ist, ein Video erzeugt, das der Ansichtspunktbewegungsoperation entspricht, durch eine Interpolation, bei der die Vielzahl der empfangenen Ansichtspunkt-Videos verwendet wird.

9. Inhaltswiedergabevorrichtung oder Inhaltswiedergabeverfahren gemäß Anspruch 8, wobei
die Ansichtspunktbewegungsoperation mit einer Vorwärts-, Rückwärts-, Aufwärts-, Abwärts-, Links- und/oder Rechtsbewegung verbunden ist.

10. Inhaltswiedergabevorrichtung gemäß einem der Ansprüche 3 oder 5 bis 9 oder Inhaltswiedergabeverfahren gemäß einem der Ansprüche 4 bis 9, wobei der Empfangsabschnitt oder der Empfangsschritt so konfiguriert ist, dass er von einem Rundfunksignal oder von einer Inhaltsübertragungsvorrichtung über ein Kommunikationsnetzwerk, aus einer Vielzahl von Ansichtspunkt-Videos, die den Mehrfachansichtspunkt-Videoinhalt konfigurieren, die Vielzahl von Ansichtspunkt-Videos, die dem eingegebenen Ansichtspunktbewegungsoperation entsprechen, empfängt bzw. erfasst.

11. Inhaltswiedergabevorrichtung gemäß einem der Ansprüche 3 oder 5 bis 10 oder Inhaltswiedergabeverfahren gemäß einem der Ansprüche 4 bis 10, wobei der Eingabeabschnitt oder der Eingabeschritt eine Ansichtspunktbewegungsschaltfläche umfasst, die dem Ansichtspunkt-String-Typ eines benachbarten Ansichtspunkt-Videos entspricht, das in der erfassten VRT enthalten ist und in der Nachbarschaft jedes der Ansichtspunkt-Videos abgebildet ist, die den Mehrfachansichtspunkt-Videoinhalt konfigurieren.

12. Inhaltswiedergabevorrichtung gemäß einem der Ansprüche 3 oder 5 bis 11,
ferner mit einem Fernsehsendetuner, der so konfiguriert ist, dass er ein digitales Rundfunksignal empfängt, das eines der Vielzahl von Mehrfachansichtspunkt-Videos enthält.

13. Inhaltswiedergabevorrichtung gemäß einem der Ansprüche 3 oder 5 bis 12,
die ferner eine Anzeigeeinheit umfasst.

14. Programm zum Veranlassen einer Inhaltsübertragungsvorrichtung gemäß Anspruch 1, das Verfahren gemäß Anspruch 2 auszuführen, wenn das Programm durch die Inhaltsübertragungsvorrichtung ausgeführt wird.

15. Programm zum Veranlassen einer Inhaltswiedergabevorrichtung gemäß einem der Ansprüche 3 oder 5 bis 13, das Verfahren gemäß einem der Ansprüche 4 bis 11 auszuführen, wenn das Programm durch die Inhaltswiedergabevorrichtung ausgeführt wird.

## Revendications

1. Appareil de transmission de contenu, comprenant :
une section de conservation (21) configurée pour conserver un contenu vidéo à points de vue multiples configuré à partir d'une pluralité de vidéos de point de vue capturées en même temps par une pluralité de caméras vidéo, différentes les unes des autres ;
une section de génération (22) configurée pour générer une table de relations de vue, VRT, contenant des informations de destination d'acquisition de chaque vidéo de la pluralité de vidéos de point de vue qui configurent le contenu vidéo à points de vue multiples, les informations de destination d'acquisition indiquant un URL servant à acquérir la vidéo de point de vue respective, et contenant également, pour chaque vidéo de la pluralité de vidéos de point de vue, des informations de direction indiquant une direction de la position de caméra à laquelle une vidéo de point de vue voisine est capturée par rapport à la position de caméra à laquelle une vidéo de point de vue est capturée et/ou des informations de distance indiquant une distance ou un angle de la position de caméra à laquelle la vidéo de point de vue voisine est capturée par rapport à la position de caméra à laquelle l'image de point de vue est capturée ;
une section de fourniture (23, 24) configurée pour fournir la VRT générée à un appareil de reproduction de contenu ;
une section de diffusion (23) configurée pour diffuser une seule vidéo ou plusieurs vidéos parmi les vidéos de point de vue qui configurent le contenu vidéo à points de vue multiples conservé ; et
une section de distribution (24) configurée pour distribuer une seule vidéo ou plusieurs vidéos parmi les vidéos de point de vue qui configurent le contenu vidéo à points de vue multiples conservé, au moyen d'un réseau, grâce à l'utilisation de l'URL de la vidéo de point de vue respective.

2. Procédé de transmission de contenu d'un appareil de transmission de contenu qui fournit un contenu vidéo à points de vue multiples configuré à partir d'une pluralité de vidéos de point de vue capturées en même temps par une pluralité de caméras vidéo, différentes les unes des autres, à un appareil de reproduction de contenu, comprenant :
par l'appareil de transmission de contenu,
une étape de génération consistant à générer une table de relations de vue, VRT, contenant des informations de destination d'acquisition de chaque vidéo de la pluralité de vidéos de point de vue qui configurent le contenu vidéo à points de vue multiples, les informations de destination d'acquisition indiquant un URL servant à acquérir la vidéo de point de vue respective, et contenant également, pour chaque vidéo de la pluralité de vidéos de point de vue, des informations de direction indiquant une direction de la position de caméra à laquelle une vidéo de point de vue voisine est capturée par rapport à la position de caméra à laquelle une vidéo de point de vue est capturée et/ou des informations de distance indiquant une distance ou un angle de la position de caméra à laquelle la vidéo de point de vue voisine est capturée par rapport à la position de caméra à laquelle l'image de point de vue est capturée ;
une étape de fourniture consistant à fournir la VRT générée à l'appareil de reproduction de contenu ;
une étape de diffusion consistant à diffuser une seule vidéo ou plusieurs vidéos parmi les vidéos de point de vue qui configurent le contenu vidéo à points de vue multiples conservé ; et
une étape de distribution consistant à distribuer une seule vidéo ou plusieurs vidéos parmi les vidéos de point de vue qui configurent le contenu vidéo conservé, au moyen d'un réseau, grâce à l'utilisation de l'URL de la vidéo de point de vue respective.

3. Appareil de reproduction de contenu qui reproduit un contenu vidéo à points de vue multiples configuré à partir d'une pluralité de vidéos de point de vue capturées en même temps par une pluralité de caméras vidéo, différentes les unes des autres, comprenant :
une section d'acquisition (40) configurée pour acquérir une table de relations de vue, VRT, contenant des informations de destination d'acquisition de chaque vidéo de la pluralité de vidéos de point de vue qui configurent le contenu vidéo à points de vue multiples, les informations de destination d'acquisition indiquant un URL servant à acquérir la vidéo de point de vue respective, et contenant également, pour chaque vidéo de la pluralité de vidéos de point de vue, des informations de direction indiquant une direction de la position de caméra à laquelle une vidéo de point de vue voisine est capturée par rapport à la position de caméra à laquelle une vidéo de point de vue est capturée et/ou des informations de distance indiquant une distance ou un angle de la position de caméra à laquelle la vidéo de point de vue voisine est capturée par rapport à la position de caméra à laquelle l'image de point de vue est capturée ;
une section d'entrée (31) configurée pour entrer une opération de déplacement de point de vue ;
une section de réception configurée pour recevoir, depuis une pluralité de vidéos de point de vue qui configurent le contenu vidéo à points de vue multiples, la pluralité de vidéos de point de vue correspondant à l'opération de déplacement de point de vue entrée, sur la base de la VRT, la section de réception contenant
une section de réception de diffusion (33) configurée pour recevoir une seule vidéo ou plusieurs vidéos parmi les vidéos de point de vue qui configurent le contenu vidéo à points de vue multiples conservé, par le biais d'une diffusion, et
une section de réception de flux vidéo (39, 44-1, 44-2) configurée pour recevoir une seule vidéo ou plusieurs vidéos parmi les vidéos de point de vue qui configurent le contenu vidéo conservé, au moyen d'un réseau, grâce à l'utilisation de l'URL de la vidéo de point de vue respective ; et
une section de génération (37) configurée pour générer une vidéo correspondant à l'opération de déplacement de point de vue sur la base de la pluralité de vidéos de point de vue reçues.

4. Procédé de reproduction de contenu d'un appareil de reproduction de contenu qui reproduit un contenu vidéo à points de vue multiples configuré à partir d'une pluralité de vidéos de point de vue capturées en même temps par une pluralité de caméras vidéo, différentes les unes des autres, comprenant :
par l'appareil de reproduction de contenu,
une étape d'acquisition consistant à acquérir une table de relations de vue, VRT, contenant des informations de destination d'acquisition de chaque vidéo de la pluralité de vidéos de point de vue qui configurent le contenu vidéo à points de vue multiples, les informations de destination d'acquisition indiquant un URL servant à acquérir la vidéo de point de vue respective, et contenant également, pour chaque vidéo de la pluralité de vidéos de point de vue, des informations de direction indiquant une direction de la position de caméra à laquelle une vidéo de point de vue voisine est capturée par rapport à la position de caméra à laquelle une vidéo de point de vue est capturée et/ou des informations de distance indiquant une distance ou un angle de la position de caméra à laquelle la vidéo de point de vue voisine est capturée par rapport à la position de caméra à laquelle l'image de point de vue est capturée ;
une étape d'entrée consistant à entrer une opération de déplacement de point de vue ;
une étape de réception consistant à recevoir, depuis une pluralité de vidéos de point de vue qui configurent le contenu vidéo à points de vue multiples, la pluralité de vidéos de point de vue correspondant à l'opération de déplacement de point de vue entrée, sur la base de la VRT, l'étape de réception contenant
une étape de réception de diffusion consistant à recevoir une seule vidéo ou plusieurs vidéos parmi les vidéos de point de vue qui configurent le contenu vidéo à points de vue multiples conservé, par le biais d'une diffusion, et
une étape de réception de flux vidéo consistant à recevoir une seule vidéo ou plusieurs vidéos parmi les vidéos de point de vue qui configurent le contenu vidéo conservé, au moyen d'un réseau, grâce à l'utilisation de l'URL de la vidéo de point de vue respective ; et
une étape de génération consistant à générer une vidéo correspondant à l'opération de déplacement de point de vue sur la base de la pluralité de vidéos de point de vue reçues.

5. Appareil de reproduction de contenu selon la revendication 3 ou procédé de reproduction de contenu selon la revendication 4, dans lequel
la VRT acquise contient également un type de chaîne de points de vue qui représente une relation entre chacune des vidéos de point de vue qui configurent le contenu vidéo et une vidéo de point de vue voisine capturée dans le voisinage de la vidéo de point de vue.

6. Appareil de reproduction de contenu ou procédé de reproduction de contenu selon la revendication 5, dans lequel
le type de chaîne de points de vue est l'un parmi : Panorama, Cinéma, Parallèle et Séparé.

7. Appareil de reproduction de contenu ou procédé de reproduction de contenu selon la revendication 6, dans lequel
la section de génération ou l'étape de génération est configurée pour relier, lorsque le type de chaîne de points de vue de la pluralité de vidéos de point de vue reçues est Panorama ou Parallèle, la pluralité de vidéos de point de vue reçues et supprimer une région prédéterminée pour générer une vidéo correspondant à l'opération de déplacement de point de vue.

8. Appareil de reproduction de contenu ou procédé de reproduction de contenu selon la revendication 6, dans lequel
la section de génération ou l'étape de génération est configurée pour générer, lorsque le type de chaîne de points de vue de la pluralité de vidéos de point de vue reçues est Cinéma, une vidéo correspondant à l'opération de déplacement de point de vue au moyen d'une interpolation dans laquelle les vidéos de la pluralité de vidéos de point de vue reçues sont utilisées.

9. Appareil de reproduction de contenu ou procédé de reproduction de contenu selon la revendication 8, dans lequel
l'opération de déplacement de point de vue est associée à des déplacements vers l'avant, vers l'arrière, vers le haut, vers le bas, vers la gauche et/ou vers la droite.

10. Appareil de reproduction de contenu selon l'une quelconque des revendications 3 et 5 à 9 ou procédé de reproduction de contenu selon l'une quelconque des revendications 4 à 9, dans lequel
la section de réception ou l'étape de réception est configurée pour recevoir depuis un signal de diffusion, ou acquérir depuis un appareil de transmission de contenu au moyen d'un réseau de communication, depuis une pluralité de vidéos de point de vue qui configurent le contenu vidéo à points de vue multiples, la pluralité de vidéos de point de vue correspondant à l'opération de déplacement de point de vue entrée.

11. Appareil de reproduction de contenu selon l'une quelconque des revendications 3 et 5 à 10 ou procédé de reproduction de contenu selon l'une quelconque des revendications 4 à 10, dans lequel
la section d'entrée ou l'étape d'entrée comprend un bouton de déplacement de point de vue correspondant au type de chaîne de points de vue d'une vidéo de point de vue voisine contenue dans la VRT acquise et capturée dans le voisinage de chacune des vidéos de point de vue qui configurent le contenu vidéo à points de vue multiples.

12. Appareil de reproduction de contenu selon l'une quelconque des revendications 3 et 5 à 11,
comprenant également un syntoniseur de diffusion de télévision configuré pour recevoir un signal de diffusion numérique contenant une vidéo de la pluralité de vidéos à points de vue multiples.

13. Appareil de reproduction de contenu selon l'une quelconque des revendications 3 et 5 à 12,
comprenant également une unité d'affichage.

14. Programme pour amener un appareil de transmission de contenu selon la revendication 1 à effectuer le procédé selon la revendication 2 lorsque ledit programme est exécuté par l'appareil de transmission de contenu.

15. Programme pour amener un appareil de reproduction de contenu selon l'une quelconque des revendications 3 et 5 à 13 à effectuer le procédé selon l'une quelconque des revendications 4 à 11 lorsque ledit programme est exécuté par l'appareil de reproduction de contenu.
